Europäisches Patentamt

European Patent Office

Office européen des brevets

(19)

(11) Numéro de publication : **0 491 618 A1**

# (12) DEMANDE DE BREVET EUROPEEN

(21) Numéro de dépôt : **91403420.2**

(22) Date de dépôt : **17.12.91**

(51) Int. Cl.$^5$ : **H04N 3/15, H04N 5/217**

(30) Priorité : **18.12.90 FR 9015853**

(43) Date de publication de la demande :
**24.06.92 Bulletin 92/26**

(84) Etats contractants désignés :
**DE GB NL**

(71) Demandeur : **THOMSON SURVEILLANCE VIDEO**
**51, Esplanade du Général de Gaulle**
**F-92800 Puteaux (FR)**

(72) Inventeur : **Dujardin, Stéphane**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Procédé et dispositif d'amélioration du rapport signal à bruit dans un dispositif à transfert de charges.**

(57) Le procédé d'amélioration du rapport signal à bruit d'un capteur d'images du type dispositif à transfert de charges DTC comportant des éléments d'images masqués, dits pixels noirs, consiste à ralentir la vitesse de sortie d'au moins deux pixels noirs hors du capteur DTC, et à échantillonner le signal de sortie du capteur DTC à des instants où le signal de sortie correspond au signal de référence de noir, la durée d'échantillonnage des pixels ralentis étant supérieure à la durée d'échantillonnage des pixels non ralentis.

Application aux caméras DTC à grande sensibilité.

EP 0 491 618 A1

Horloge ralentie

Commande Ralentissement

Sortie DTC

Echantillonnage DTC

FIG. 4b

FIG. 4c

FIG. 4d

FIG. 4e

L'invention concerne un procédé et un dispositif pour améliorer le rapport signal à bruit du signal de sortie d'un capteur d'images du type dispositif à transfert de charges DTC (CCD en anglais).

Dans les capteurs d'images du type dispositif à transfert de charges DTC, le transfert des charges stockées par chaque élément d'image, ou pixel, est commandé par un circuit de synchronisation extérieur au capteur qui crée des signaux logiques, ou horloges, nécessaires au transfert vertical des charges dans le capteur et au déplacement horizontal des informations hors du capteur, ce déplacement horizontal étant effectué séquentiellement pixel par pixel. Les horloges nécessaires au déplacement vertical et horizontal des charges sont respectivement appelées, dans la suite de la description, horloges verticales et horloges horizontales. Le nombre d'horloges verticales et horizontales nécessaires pour la commande d'un capteur DTC varie d'un capteur à l'autre selon son mode de fonctionnement.

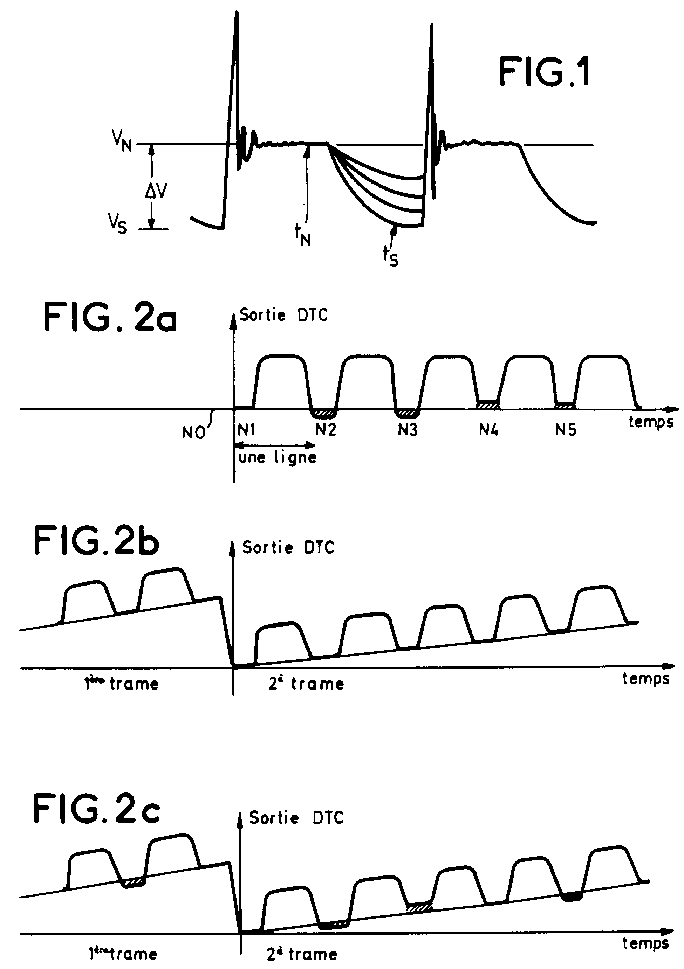

Le signal délivré en sortie d'un dispositif à transfert de charges a l'aspect général illustré sur la figure 1, qui représente une portion du signal correspondant à deux pixels consécutifs du capteur DTC (la séquence des signaux correspondant à l'ensemble des pixels permet de reconstituer une trame de l'image formée sur le dispositif à transfert de charges) ; pour un capteur comportant 550 pixels par ligne, par exemple, la période de récurrence des signaux est de l'ordre de 95 ns pour chaque pixel.

Typiquement, un tel signal présente tout d'abord, pour chacune des périodes de récurrence, un parasite de forte amplitude, dû essentiellement à des phénomènes de commutation des horloges horizontales, et pouvant s'étendre sur une durée de l'ordre de 20 ns. L'amplitude de ce parasite est très importante et peut varier, selon les types de composants utilisés pour la fabrication des horloges, entre 200 mV et 1 Volt de tension de crête.

Le signal présente ensuite une partie en plateau, où la tension reste stable pendant une durée d'environ 20 ns. Cette tension, généralement désignée "tension de précharge", sera ensuite utilisée comme tension de référence par rapport à laquelle sera mesurée l'amplitude du signal proprement dit. Au bruit près, cette tension de référence correspond à la tension que délivrerait le capteur en l'absence de toute illumination, c'est pourquoi on la désigne également sous le nom de tension de noir $V_N$, ou niveau de noir.

Après la partie de précharge, le signal présente ensuite une partie dite "de charge", où la tension du signal s'écarte progressivement du niveau de référence $V_N$ jusqu'à se stabiliser à une valeur $V_S$ que l'on désignera par la suite sous le nom de "tension de signal". Cette tension de signal varie en fonction de l'intensité lumineuse ayant frappé le pixel correspondant du capteur.

Le niveau de l'intensité lumineuse est mesuré par l'écart de tension $\Delta V = V_S - V_N$ ; cet écart peut atteindre jusqu'à 500 millivolts, mais les valeurs moyennes de $\Delta V$ habituellement rencontrées sont plutôt de l'ordre de quelques millivolts à quelques dizaines de millivolts, d'où l'importance de maintenir le rapport signal à bruit à des niveaux acceptables.

L'écart de tension $\Delta V$ peut être obtenu par exemple par un dispositif réalisant un double échantillonnage : un échantillonnage à l'instant $t_N$ pour connaître le niveau de noir et à l'instant $t_S$ pour connaître le niveau du signal.

Cependant le bruit dû essentiellement à la commutation des horloges horizontales du capteur provoque des variations aléatoires du niveau de noir d'un pixel à l'autre et donc d'une ligne vidéo à l'autre. Ceci est gênant pour des caméras à grande sensibilité pour lesquelles le gain de la chaîne vidéo est important. En effet ces variations du niveau de noir se caractérisent sur l'image par des traits noirs horizontaux.

De plus les fluctuations du niveau de noir sont en outre provoquées par des charges électriques créées par agitation thermique dans le capteur d'images. Ces charges donnent naissance à un signal d'obscurité proportionnel au temps de stockage des charges dans le capteur et qui croît exponentiellement avec la température. L'effet de ce signal d'obscurité est particulièrement important pour les capteurs d'images du type transfert de trame et se traduit sur une image par une dégradation verticale du noir de l'image. Cette dégradation verticale est d'autant plus importante que la température et le gain d'amplication sont élevés.

Dans l'art antérieur, pour diminuer les variations aléatoires du niveau de noir d'une ligne à l'autre, l'image est référencée sur des éléments d'images masqués dits "pixels noirs ", qui ne reçoivent donc aucune lumière, et qui sont prévus à cet effet par le constructeur. Plusieurs éléments d'images masqués sont prévus sur chaque ligne, par exemple en début de ligne, des capteurs à transfert de charges. Pour référencer l'image sur des pixels noirs, un circuit moyenneur à constante de temps élevée, par exemple 1 ms, est utilisé. Ce circuit est disposé en sortie du capteur DTC et filtre les variations rapides du niveau de noir en moyennant sur plusieurs lignes, le niveau de noir donné par les pixels noirs.

Cependant, du fait de sa constante de temps, le circuit moyenneur laisse passer les variations lentes du niveau de noir, c'est-à-dire les variations verticales du niveau de noir, qui se retrouvent sur l'image de manière déformées et plus visibles.

L'invention concerne un procédé qui permet à la fois de diminuer les variations rapides et aléatoires du niveau de noir d'une ligne à l'autre et de rattraper les variations lentes du niveau de noir, dues à la température dans les capteurs DTC du type à transfert de trame.

Selon l'invention, le procédé d'amélioration du rapport signal à bruit du signal de sortie d'un capteur d'images du type dispositif à transfert de charges comportant des éléments d'images masqués, dits pixels noirs, servant de référence de noir, et pour lequel le signal de sortie est obtenu par une lecture séquentielle des pixels, est caractérisé en ce qu'il consiste :

– pendant la lecture des pixels noirs, à ralentir la vitesse de sortie des charges associées à au moins deux pixels noirs, hors du capteur DTC,

– à échantillonner le signal de sortie du capteur DTC à des instants où le signal de sortie correspond au signal de référence de noir, la durée d'échantillonnage des pixels ralentis étant supérieure à la durée d'échantillonnage des pixels non ralentis.

L'invention concerne également un dispositif pour la mise en oeuvre de ce procédé.

D'autres particularités et avantages de l'invention apparaîtront clairement dans la description suivante donnée à titre d'exemple non limitatif et faite en regard des figures annexées qui représentent :

– la figure 1 précitée, une forme typique du signal délivré par un dispositif à transfert de charges,

– les figures 2a, 2b et 2c des exemples de variations du niveau de noir ligne à ligne ; 2a : les variations sont dues uniquement au phénomène de commutation des horloges ; 2b : les variations sont dues uniquement à des variations de température ; 2c : les variations sont dues aux deux phénomènes des figures 2a et 2b,

– la figure 3, un circuit du traitement du signal de sortie d'un capteur DTC à transfert de charges,

– les figures 4a, 4b, 4c, 4d et 4e représentent des exemples de diagrammes des temps de différents signaux ; 4a : un signal d'horloge horizontale classique ; 4b : un signal d'horloge horizontale, selon l'invention ; 4c : un signal de commande de ralentissement de l'horloge horizontale ; 4d : le signal de sortie d'un capteur DTC, selon l'invention ; 4e : un signal de commande de l'échantillonnage du niveau de signal de sortie, selon l'invention,

– la figure 5, un exemple de dispositif pour la mise en oeuvre du procédé, selon l'invention.

Sur les figures 2a, 2b et 2c, sont représentés les signaux de sortie d'un dispositif à transfert de charges ayant reçu à l'entrée un éclairement à niveau constant et de faible intensité, par exemple en dessous de 0,1 Lux.

Pour la figure 2a, cinq lignes successives sont représentées ; les valeurs du niveau de noir pour chaque ligne représentée sont respectivement égales à N1, N2, ..., N5, et leur valeur moyenne, N0, est prise comme axe de temps. Cette figure montre que les variations du niveau de noir dues à la commutation des horloges horizontales sont aléatoires et fluctuent autour d'une valeur moyenne N0.

La figure 2b montre les variations du niveau de noir dues à la température, pour deux trames consécutives d'un dispositif à transfert de charges. Sur cette figure sont représentées les deux dernières lignes de la première trame et les cinq premières lignes de la trame suivante. Les variations du niveau de noir sont en dents de scie : le niveau de noir augmente régulièrement à chaque ligne et de façon linéaire, puis brusquement, au changement de trame, il reprend sa valeur initiale.

La figure 2c montre les variations du niveau de noir dues à la fois à la commutation des horloges et à des variations de température. Sur cette figure sont représentées les deux dernières lignes d'une première trame et les cinq premières lignes de la trame suivante. Les variations du niveau de noir sont en dents de scie avec en plus une fluctuation aléatoire autour de la pente de ces dents de scie.

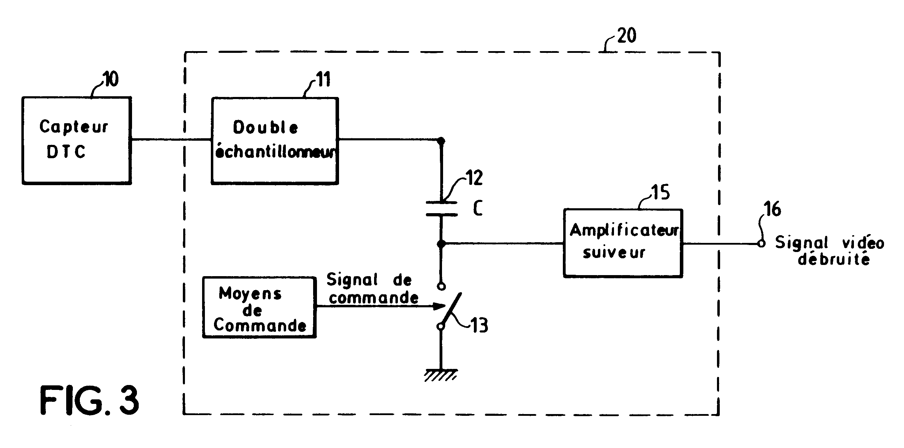

La figure 3 représente un circuit de traitement 20 du signal de sortie d'un capteur DTC à transfert de charges 10. Ce circuit de traitement 20 comprend un double échantillonneur 11 recevant en entrée le signal de sortie d'un dispositif à transfert de charges 10 et délivrant en sortie l'information utile, c'est-à-dire la mesure de l'amplitude du signal proprement dit. L'amplitude du signal, pour chaque pixel, est égal à la différence entre la valeur de la tension de charge $V_S$ et la valeur de la tension de précharge $V_N$.

La sortie du double échantillonneur 11 est reliée à l'une des armatures d'un condensateur 12 de capacité C de mise en mémoire du niveau de noir. La deuxième armature du condensateur 12 peut être mise à la tension de la masse par des moyens 13 formant interrupteur statique, ces moyens 13 étant commandés par des moyens 14 de commande. Au point de connexion entre la deuxième armature du condensateur et les moyens 13, est relié un amplificateur suiveur 15 qui délivre sur sa sortie 16 le signal vidéo débruité. La sortie 16 est aussi la sortie du circuit de traitement 20.

Ainsi, lorsque la tension de sortie du double échantillonneur 11 correspond à la tension de noir, c'est-à-dire aux instants de lecture des pixels cachés, ces pixels cachés étant par exemple disposés au début de chaque ligne, les moyens de commande 14 ferment les moyens 13 pour mettre la deuxième armature du condensateur 12 au potentiel de la masse. Le condensateur 12 se charge alors à la valeur de la tension de noir qui est mémorisée pour servir de référence de noir à tous les pixels d'une même ligne, tandis que le potentiel de la masse est transmis à travers l'amplificateur suiveur 15 vers la sortie 16 du circuit de traitement. Lorsque la tension de sortie du double échantillonneur 11 correspond à la tension du signal proprement dit, les moyens de commande 14 ouvrent les moyens 13 et la tension du signal référencée au niveau de noir précédemment mémorisé dans le condensateur 12, est transmise à travers l'amplificateur suiveur 15 vers la sortie 16 du circuit de traitement 20.

La valeur de la capacité C du condensateur 12 doit permettre de rattraper, ligne à ligne, les variations lentes du niveau de noir, ces variations lentes étant dues aux variations de température dans les capteurs DTC.

Pendant la lecture des pixels cachés, placés par exemple en début de chaque ligne, il faut donc charger la valeur de la tension de noir correspondante dans la capacité C de mémorisation qui doit avoir une valeur adaptée. A cet effet, la constante de temps de charge du condensateur doit être inférieure au temps de lecture des pixels cachés. Cette exigence est contraire à la limitation des variations aléatoires ligne à ligne du niveau de noir qui nécessitent une constante du temps élevée.

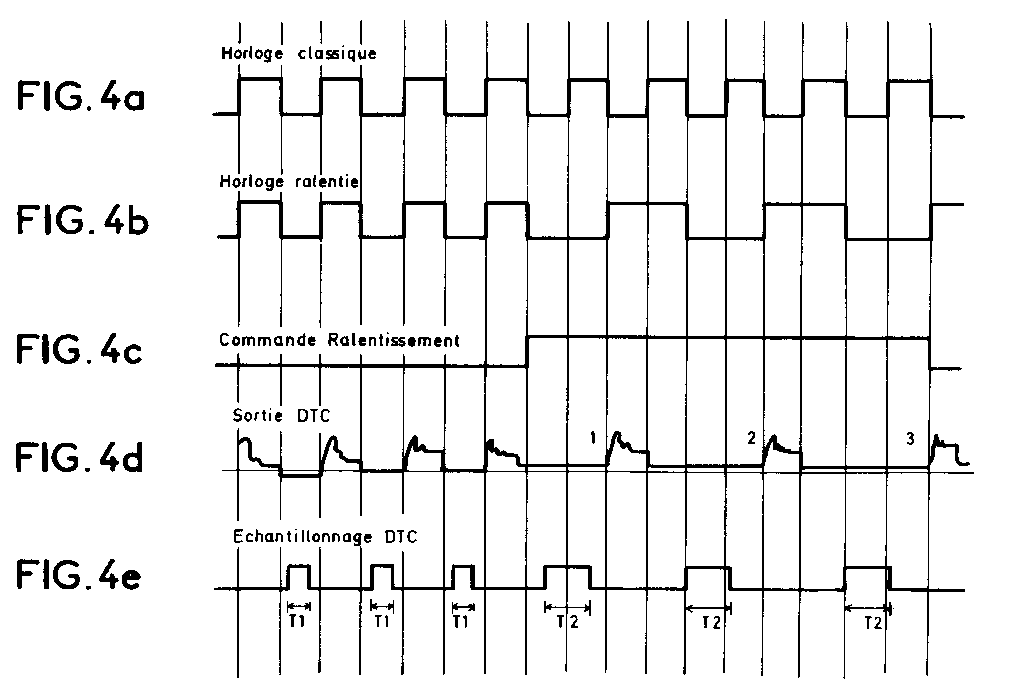

Dans un dispositif à transfert de charges, les charges contenues dans le registre de sortie sont lues pixel par pixel, la lecture étant commandée par un signal d'horloge horizontale. Le nombre d'impulsions d'horloges nécessaires à cette lecture est égal au nombre de pixels à lire et classiquement la largeur des impulsions d'horloge est constante pendant toute la durée de la lecture des informations, tel que représenté sur la figure 4a.

La figure 4b représente un exemple de diagramme des temps du signal d'horloge horizontale, selon l'invention.

Sur cette figure, la largeur des impulsions d'horloge n'est plus une constante et dans cet exemple, trois impulsions consécutives sont ralenties d'un facteur 2 par rapport aux autres impulsions. Le signal de commande du ralentissement de l'horloge horizontale et le diagramme des temps de sortie des charges associées à chaque pixel hors du capteur DTC correspondant à l'exemple de la figure 4b sont respectivement représentés sur les figures 4c et 4d. Le ralentissement des horloges horizontales est effectué uniquement pendant la période de lecture des pixels cachés non exposés à la lumière, ou pixels noirs. Ces pixels cachés sont définis par le constructeur du capteur. De cette façon, pendant ce ralentissement, l'information contenue dans chaque pixel ralenti sort plus lentement hors du capteur DTC et l'échantillonnage du niveau de noir en sortie du capteur DTC peut être effectué sur un temps plus long et aux instants où l'information utile est la moins polluée. La fréquence des horloges horizontales avant et après le ralentissement est la même et la durée du ralentissement correspond à la durée de lecture d'au moins deux pixels noirs et au maximum à la durée de lecture de tous les pixels noirs.

La figure 4e représente un exemple de diagramme des temps du signal de commande de l'échantillonnage du niveau noir. La largeur des impulsions de commande est égale à T1 pour les pixels qui n'ont pas été ralentis, tandis qu'elle est égale à T2 pour les pixels qui ont été ralentis, la largeur T2 étant supérieure à la largeur T1.

Le ralentissement des horloges horizontales pendant la période de lecture des pixels cachés permet d'une part à l'échantillonneur 11, disposé en sortie du capteur DTC 10, de recueillir l'information utile aux instants où elle est la moins polluée et de délivrer en sortie un signal dont le niveau de noir comporte moins de parasites aléatoires. Il permet d'autre part, de disposer de plus de temps pour charger, en chaque début de ligne, le condensateur 12 de mémorisation du niveau de référence de noir. A constante de temps égale, il est alors possible de diminuer la valeur de la capacité C du condensateur 12.

Le ralentissement des horloges horizontales pendant la lecture des pixels noirs c'est-à-dire le ralentissement de la vitesse de sortie des charges associées aux pixels hors du capteur DTC, répond donc à deux exigences qui s'opposaient jusqu'à présent : permettre de filtrer les variations lentes du niveau de noir avec une valeur de capacité C plus faible car le temps disponible pour effectuer ce filtrage est plus grand et le signal comporte moins de parasites aléatoires, et permettre de filtrer les variations verticales du niveau de noir dues aux variations de température car la constante de temps du circuit de traitement du signal de sortie du capteur DTC est adaptée.

Le ralentissement des horloges horizontales est effectué pendant la période de lecture des pixels cachés. Il peut être effectué sur tout ou partie des pixels définis par le constructeur du capteur DTC comme étant cachés.

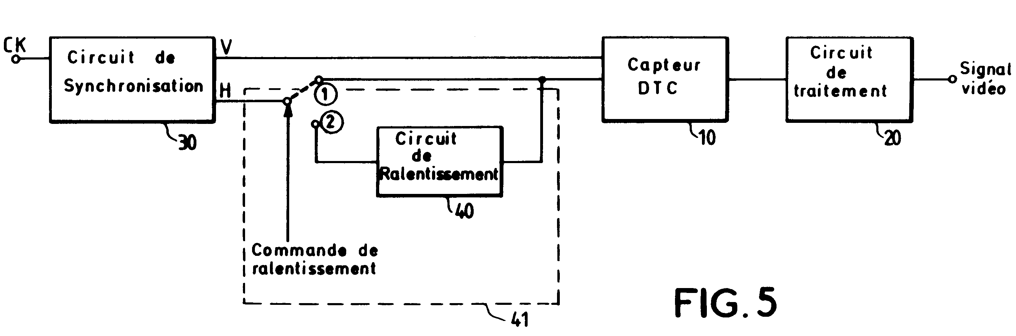

La figure 5 représente un exemple de dispositif pour la mise en oeuvre du procédé, selon l'invention.

Ce dispositif comprend un circuit de synchronisation 30, des moyens 41 de ralentissement des horloges horizontales, un capteur DTC, 10, et un circuit de traitement, 20. Le circuit de synchronisation, 30, générateur et séquenceur de signaux logiques reçoit en entrée un signal d'horloge de base CK et crée les signaux d'horloge nécessaires à la commande d'un capteur d'images du type dispositif à transfert de charges. Les signaux d'horloge représentés sur la figure 5 sont les signaux d'horloge nécessaires aux déplacements vertical et horizontal des charges dans le capteur DTC et hors du capteur DTC. Ces signaux sont respectivement notés V et H. Cependant, d'autres signaux de commande peuvent être créés, notamment les signaux de remise à zéro.

Les sorties du circuit de synchronisation délivrant les signaux d'horloges verticales V sont connectées à l'entrée du capteur DTC, 10. Les sorties du circuit de synchronisation délivrant les signaux d'horloges horizontales H sont reliées à un dispositif de connexion à deux positions 1 et 2 qui transmet directement les signaux d'horloges horizontales H au capteur DTC lorsqu'il est en position 1, tandis que lorsqu'il est en position 2, il transmet les signaux d'horloges horizontaux à un circuit de ralentissement 40, tel que par exemple un circuit diviseur, qui ralentit la fréquence des horloges horizontales et transmet le signal ralenti au capteur DTC 10. La position du dispositif de connexion est commandée par un signal de commande de ralentissement. Le ralentissement est effectué à des instants donnés correspondant aux instants de lecture des pixels noirs et pendant tout ou partie de la durée de cette lecture.

Ce dispositif représente un mode de réalisation de l'invention. Un autre mode de réalisation peut lui être préféré, tel que par exemple, en utilisant un composant du type composant logique programmable pour réaliser à la fois, dans un seul circuit intégré, le circuit de synchronisation et la fonction de ralentissement des horloges horizontales à des instants donnés et pour une durée donnée. De cette façon, le ralentissement est commandé de préférence par le circuit de synchronisation du capteur DTC, car lui seul connaît la position horizontale réelle des différents pixels. Le circuit de synchronisation va donc au moment adéquat, pendant la lecture des pixels noirs, diviser par exemple par deux, la fréquence des impulsions des horloges horizontales de déplacement des pixels hors du capteur DTC. Le circuit de synchronisation peut être réalisé, par exemple, en un circuit intégré du type composant logique programmable composant connu sous son appellation PLD (Programmable Logic Device) ou EPLD (Erasable Programmable Logic Device) dans lequel le concepteur aura prévu l'intégration de ces fonctions de ralentissement.

L'invention n'est pas limitée aux exemples précisément décrits, notamment le ralentissement des horloges horizontales n'est pas nécessairement une division de la fréquence des impulsions d'un facteur 2, mais ce ralentissement peut être plus ou moins important selon les types de capteurs DTC utilisés et selon les applications envisagées. Le ralentissement peut être effectué sur la totalité ou seulement sur une partie des pixels noirs définis comme tels par le constructeur du capteur.

## Revendications

1 - Procédé d'amélioration du rapport signal à bruit du signal de sortie d'un capteur d'images du type dispositif à transfert de charges (DTC ) comportant des éléments d'images masqués, dits pixels noirs, servant de référence de noir, et pour lequel le signal de sortie est obtenu par une lecture séquentielle des pixels rythmée par des impulsions d'horloges horizontales, caractérisé en ce qu'il consiste :

– pendant la lecture des pixels noirs, à ralentir la vitesse de sortie des charges associées à au mois deux pixels noirs, hors du capteur (DTC),
– à échantillonner le signal de sortie du capteur

(DTC) à des instants où le signal de sortie correspond au signal de référence de noir, la durée d'échantillonnage des pixels ralentis étant supérieure à la durée d'échantillonnage des pixels non ralentis.

2 - Procédé selon la revendication 1, caractérisé en ce qu'il consiste, aux instants de lecture des pixels à ralentir, à diminuer la fréquence des impulsions d'horloges horizontales pour ralentir la vitesse de sortie de ces pixels.

3 - Procédé selon la revendication 2, caractérisé en ce que la fréquence des impulsions d'horloges horizontales est diminuée d'un facteur 2 aux instants de lecture des pixels à ralentir.

4 - Dispositif pour la mise en oeuvre du procédé selon l'une quelconque des revendications précédentes comportant un dispositif à transfert de charges (DTC) associé à un circuit de synchronisation (30) créant les impulsions d'horloges nécessaires au transfert des charges à l'intérieur du capteur (DTC) et au déplacement horizontal des pixels hors du capteur (DTC) et comportant un circuit de traitement (20) du signal de sortie délivré par le capteur (DTC), caractérisé en ce qu'il comporte en outre des moyens de ralentissement (41) des horloges horizontales pendant des instants de lecture des pixels noirs de référence.

FIG.1

FIG. 2a

Sortie DTC

FIG.2b

Sortie DTC

FIG.2c

Sortie DTC

FIG. 3

FIG.4a

Horloge classique

FIG.4b

Horloge ralentie

FIG.4c

Commande Ralentissement

FIG.4d

Sortie DTC

1      2      3

FIG.4e

Echantillonnage DTC

T1    T1    T1    T2    T2    T2

EP 0 491 618 A1

FIG. 5

EP 0 491 618 A1

Office européen
des brevets

**RAPPORT DE RECHERCHE EUROPEENNE**

Numero de la demande

EP 91 40 3420

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 455 574 (HASHIMOTO et al.)<br>* Colonne 1, lignes 33-64; figure 3 *<br>--- | 1-4 | H 04 N 3/15<br>H 04 N 5/217 |
| A | FR-A-2 631 504 (THOMSON)<br>* Page 3, ligne 34 - page 4, ligne 15; figures 1,3 *<br>--- | 1 | |
| A | US-A-4 742 392 (HASHIMOTO)<br>* Colonne 7, lignes 1-36; figures 1,6C *<br>----- | 1 | |

DOMAINES TECHNIQUES
RECHERCHES (Int. Cl.5)

H 04 N

Le présent rapport a été établi pour toutes les revendications

| Lieu de la recherche | Date d'achèvement de la recherche | Examinateur |
|---|---|---|
| LA HAYE | 26-02-1992 | BEQUET T.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)